# EUROPEAN PATENT APPLICATION

(11) **EP 4 467 444 A1**
(43) Date of publication of application: **27.11.2024**
(21) Application number: 24169615.2
(22) Date of filing: 11.04.2024
(51) Int. Cl.: B64C 1/06, B64D 11/00, B32B 27/40, B64F 5/40, B64D 45/00

(54) **SELECTIVE PROTECTIVE COATING, SYSTEM, AND METHOD FOR VEHICLE CABIN INTERIOR STRUCTURES**

(30) Priority: 25.05.2023 US 202318323596
(71) Applicant: The Boeing Company, Arlington, VA 22202 (US)
(72) Inventor: DOWDELL, Robert Morton, Arlington, 22202 (US)
(74) Representative: Bryn-Jacobsen, Caelia

(57) **Abstract**

Vehicle cabin interiors (14) comprising cabin interior exterior structures (22, 23, 26) having high-risk abrasion regions (22b, 23b, 26b) are protected from damage by protecting the high-risk abrasion regions (22b, 23b, 26b) with a transparent and self-healing partial outer coating (122, 123, 126) made from a self-healing thermoplastic polyurethane material are disclosed.

## Description

### TECHNOLOGICAL FIELD

The present disclosure relates generally to the field of vehicle cabin interiors and vehicle cabin interior structures, including aircraft cabin interiors and aircraft cabin interior structures. More specifically the present disclosure relates to the field of wear protection for vehicle interior structures.

### BACKGROUND

Vehicle cabin interiors including, for example, passenger vehicle cabin interiors, can include cabin interior surfaces that can be exposed to habitual or repeated wear due to, for example, the wear associated with abrasion of the exterior surfaces. Over time, such cabin exterior surfaces can sustain a degree of damage that can require rework and/or replacement. Such rework and/or replacement of such cabin region structures and structure surfaces can be time-consuming, and further can be costly, as vehicles may be taken out of service while conducting the rework and/or replacement of structures within vehicle cabin interior regions that sustain damage requiring rework and/or replacement.

Unless explicitly identified as such, no statement herein is admitted as prior art merely by its inclusion in the Technological Field and/or Background section.

### SUMMARY

Present aspects are directed to vehicle cabin interior structures having protective coating layers partially covering specific and selected regions of vehicle cabin structures that are positioned at, or that otherwise occur within, areas of high-risk for damage from, for example, abrasion, etc.

According to a present aspect, a vehicle cabin interior structure is disclosed, with the vehicle cabin structure including a structure exterior surface including an identified structure exterior surface first region (e.g., a "high-risk" damage region") having a first area and a structure exterior surface second region (e.g., a "lower-risk" damage region as compared with the "high-risk" damage region) having a second area, and a partial outer coating layer, with the partial outer coating layer including a self-healing material, with the partial outer coating layer configured to coat only the structure exterior surface first region.

In another aspect, the first area comprises less area than the second area.

In another aspect, the structure exterior surface includes a decorative laminate coating layer.

In another aspect, the partial outer coating layer comprises a thermoplastic polyurethane.

In a further aspect, the structure surface exterior first region is located in the vehicle cabin interior at a high-risk damage area for structure exterior surface abrasion damage.

In another aspect, the partial outer coating layer is substantially transparent.

In another aspect, the partial outer coating layer is a substantially transparent thermoplastic polyurethane layer film.

In another aspect, the partial outer coating layer comprises a UV/visible light-resistant material.

In another aspect, the structure exterior surface comprises the exterior of at least one of a storage bin, a ceiling, a partition wall, a lavatory wall, a galley wall, a sidewall, a seat frame, a seat armrest, a seat assembly panel and combinations thereof.

In a further aspect, the partial outer coating layer further comprises an adhesive layer.

In a further aspect, the partial outer coating layer is a partial outer coating layer film.

In another aspect, the partial outer coating layer is a self-adhering partial outer coating layer film.

In a further aspect, the partial outer coating layer has a Young's modulus ranging from about 10 MPa to about 120 MPa.

In another aspect, the partial outer coating layer comprises a UV/visible light transmittance value ranging from about 0% to about 20% UV/visible light transmittance for UV/visible light wavelengths ranging from about 180 nm to about 800 nm when partial outer coating layer comprises an average thickness ranging from about 2 mils to about 6 mils.

In another aspect, the partial outer coating layer comprises a self-healing substantially transparent thermoplastic polyurethane film.

In another aspect, the vehicle cabin interior is an aircraft cabin interior.

Another aspect is directed to a vehicle comprising the vehicle cabin structure including a vehicle cabin structure exterior surface including a structure exterior surface first region having a first area (e.g., a "high-risk damage area") and a structure exterior surface second region having a second area, and a partial outer coating layer, with the partial outer coating layer including a self- healing material, with the partial outer coating layer configured to coat only the structure exterior surface first region having a first area, with the partial outer coating layer positioned adjacent the structure exterior surface second region having a second area, and with the first area comprising less area than the second area.

In another aspect the vehicle is an aircraft.

Another present aspect is directed to a vehicle cabin interior structure comprising a structure exterior surface, with the structure exterior surface including a rework patch area, with the rework patch area comprising a decorative laminate layer, with the rework patch area further comprising an abrasion-resistant outer coating layer disposed onto the decorative laminate layer to form a reworked patch area, and with the abrasion-resistant outer coating layer comprising a self-healing thermoplastic polyurethane material.

In another aspect, the vehicle cabin interior comprising the rework patch area is an aircraft cabin interior.

A further aspect is directed to a vehicle comprising the vehicle cabin interior comprising the reworked area comprising the self-healing thermoplastic polyurethane material.

In another aspect, the vehicle is an aircraft.

Another present aspect is directed to a vehicle cabin interior rework patch comprising a decorative laminate material layer and a self-healing abrasion-resistant outer coating layer disposed onto the decorative laminate layer to substantially cover the decorative laminate material layer.

In a further aspect, the abrasion-resistant outer coating layer is substantially transparent.

In another aspect, the abrasion-resistant outer coating layer comprises a self-healing thermoplastic polyurethane material film.

In another aspect, the self-healing thermoplastic polyurethane material has a Young's modulus value ranging from about 10 MPa to about 120 MPa.

A further present aspect is directed to a method for protecting a vehicle cabin interior structure region from surface damage, with the method including, providing a vehicle cabin interior structure, with the vehicle cabin interior structure comprising a vehicle cabin structure exterior surface, with the vehicle cabin structure exterior surface comprising a structure exterior surface first region having a first area and a structure exterior surface second region having a second area, with the structure exterior surface first region positioned adjacent to the structure exterior surface second region, and with the structure exterior surface first region positioned within a high-risk damage location, adhering a protective outer coating layer only to the structure exterior surface first region, and protecting the structure exterior surface first region from abrasion damage.

In another aspect, the protective outer coating layer comprises a thermoplastic polyurethane.

In another aspect, the protective outer coating layer comprises a substantially transparent thermoplastic polyurethane.

In a further aspect, the structure exterior surface first region further comprises a decorative laminate coating located beneath the protective outer coating layer.

In another aspect, the protective outer coating layer comprises a UV/visible light-resistant material.

In another aspect, the vehicle cabin interior structure region comprises at least one of a storage bin exterior surface, a ceiling exterior surface, a partition wall exterior surface, a lavatory wall exterior surface, a lavatory door exterior surface, a galley area wall exterior surface, a seating assembly panel exterior surface, a flight deck door exterior surface, a closet exterior surface, a sidewall exterior surface, and combinations thereof.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is an illustration of a vehicle in the form of an aircraft, according to present aspects;
FIG. 2 is a cross-section view of a vehicle cabin interior in the form of an aircraft cabin interior of the type contained within the vehicle shown in FIG. 1 and taken along line 2-2, according to present aspects;
FIG. 3 is an outboard view from within a vehicle cabin interior of the type shown in FIG. 2, according to present aspects;
FIG. 4 is an enlarged view of vehicle cabin interior structures located within a vehicle cabin interior; according to present aspects,
FIG. 5A is an upward view of a vehicle cabin interior structure, according to present aspects;
FIG. 5B is an upward view of aa vehicle cabin interior structure, according to present aspects;
FIG. 5C is an upward view of a vehicle cabin interior structure, according to present aspects;
FIG. 6A is a perspective view of a vehicle cabin interior structure in the form of a seating assembly, according to present aspects;
FIG. 6B is a perspective view of a vehicle cabin interior structure in the form of a seating assembly, according to present aspects; and
FIG. 7 is a flowchart outlining a method, according to present aspects.

### DETAILED DESCRIPTION

According to present aspects, aircraft cabin exposed surfaces of aircraft cabin interior structures can exist and can otherwise be positioned within areas of the aircraft cabin interior that can be locations where abrasion damage is more likely than not to occur, over time. Such locations are referred to herein as high-risk abrasion damage areas in the aircraft cabin interior, and such high-risk abrasion damage areas can include, for example and without limitation, areas immediately adjacent, proximate to, or otherwise near, for example, an aircraft cabin floor, a aircraft cabin aisle, an aircraft cabin ceiling, etc., and can include, for example, portions of an aircraft cabin interior sidewall panel exposed surface, an aircraft cabin storage bin exposed surface, a partition wall exposed surface, a ceiling exposed surface that can be adjacent storage bins, a seating assembly (that can include a seat frame, a seat armrest, a seating assembly exterior panel that can be a seating assembly exterior panel for seating suites, a seat assembly panel partition for fully reclining seating areas), etc.

When portions of aircraft cabin interior structure exposed surfaces sustain abrasion damage, or are otherwise scuffed, marred, dented, abraded, etc., such structures, or damaged surface areas of such damaged structures, must be reworked or replaced, at least for the purpose of re-establishing a blemish-free aesthetic appearance, or "like new" appearance, within the aircraft cabin interior. That is, sustained abrasion or other "scuffing" damage of portions of exposed (referred to equivalently herein as "exterior" ) surfaces of aircraft cabin structures are visually unappealing, and otherwise make a structure appear "worn", "aged", etc., and can otherwise negatively impact the appearance of at least a portion of an aircraft cabin interior. However, reworking and/or attempting to clean structure surfaces that have suffered abrasions is time-consuming, incurs significant cost, and can interrupt a desired, visually uniform appearance. In addition, treating entire surfaces with protective material layers can add considerable undesirable weight and prohibitive cost to larger structures such as, for example, vehicles that can include, for example, aircraft.

Present aspects, are directed to protective partial coatings that can be self-healing protective partial coatings, coating layers, a single coating layer, and can further be a protective partial coating film for aircraft cabin exposed surfaces, including aircraft cabin exposed surfaces located in high-risk abrasion damage areas within the aircraft cabin interior. The protective partial coating can be applied to an aircraft cabin interior structure prior to structure installation, can be applied to a structure as retrofit partial protective coating, and can further be applied to an installed structure as an exterior layer in conjunction with reworking structures (including, e.g., reworking decorative laminates of structures) that have incurred damage and require rework.

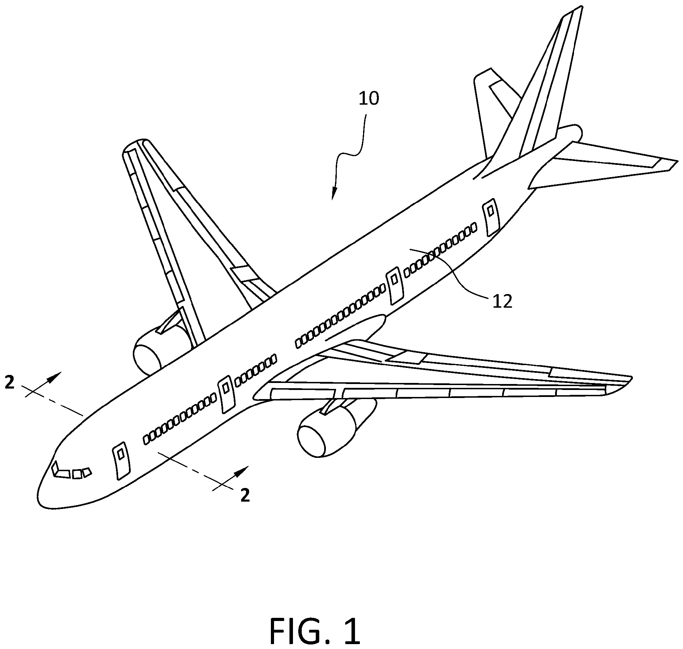

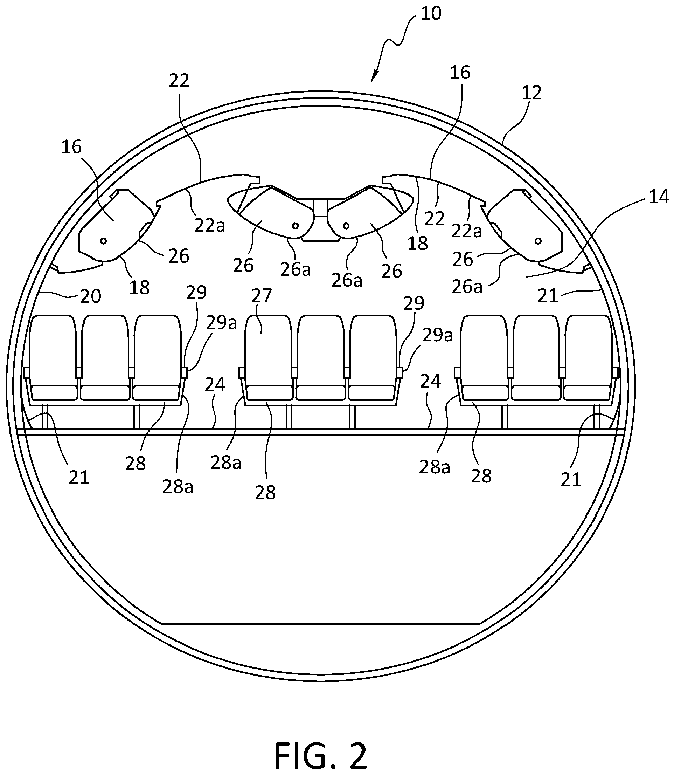

FIG. 1 shows a vehicle 10 in the form of an aircraft, that can be, for example, a passenger aircraft having a fuselage 12. FIG. 2 is a cross-sectional view of vehicle 10 taken along lines 2-2 (shown in FIG. 1). As shown in FIG. 2, an aircraft cabin interior 14 is shown bounded by aircraft cabin interior structures 16 having aircraft cabin interior structure exposed surfaces 18. The aircraft cabin interior structures 16 can be structurally attached to the inside of fuselage 12, or can be attached to structures that are attached to the inside of the fuselage 12, for example.

Aircraft cabin interior structures 16, as shown in FIG. 2, can include aircraft cabin interior sidewall panels 20 having an aircraft interior sidewall panel exposed surface 21. Aircraft cabin interior structures 16 further include an aircraft cabin interior ceiling 22 having a cabin ceiling exposed surface 22a, an aircraft cabin interior floor 24, and storage bins 26 having a storage bin exposed surface 26a. FIG. 2 further shows cabin seats 27 having seat frames 28 with seat frame exposed surfaces 28a, and seat armrests 29 with seat armrest exposed surfaces 29a. The aircraft cabin interior structure "exposed surfaces" mentioned herein are understood to be cabin interior structure outer or exterior surfaces of structures that are "exposed" to the aircraft cabin interior environment and that can be referred to equivalently as cabin structure "exterior" and/or "outer" surfaces located within the aircraft cabin environment.

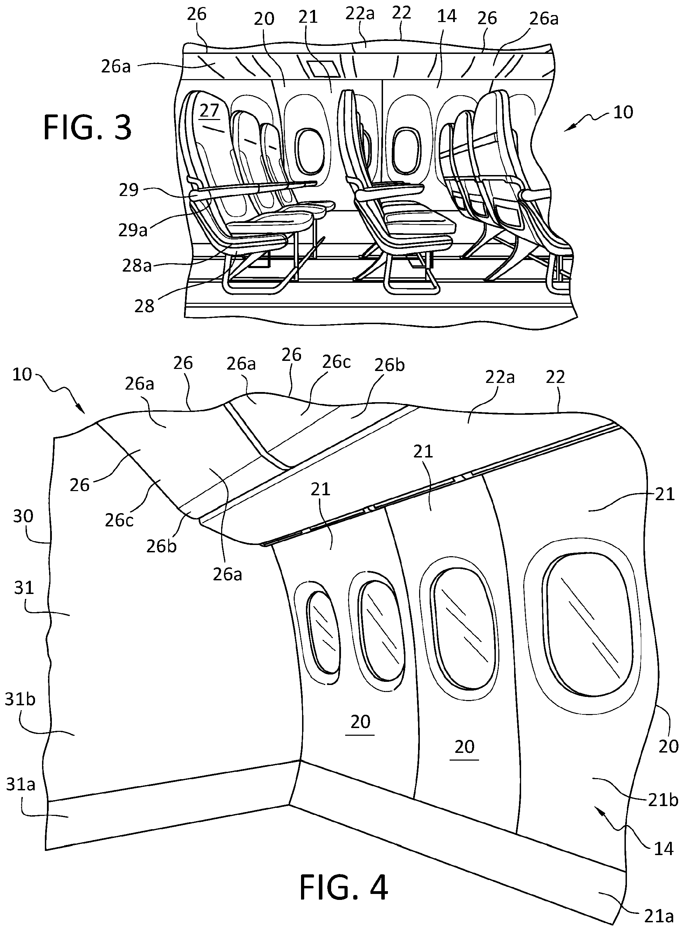

FIGs. 3 and 4 are further illustrations of a vehicle cabin interior 14 in the form of an aircraft cabin interior. FIG. 3 is a partial outboard view from within an aircraft cabin interior 14 of an aircraft 10 that can be of the type shown in FIGs. 1 and 2, for example. As shown in FIG. 3, aircraft cabin interior sidewall panels 20 include an aircraft interior sidewall panel exposed surface 21. Aircraft cabin interior 14 further includes an aircraft cabin interior ceiling 22 having a cabin ceiling exposed surface 22a, an aircraft cabin interior floor 24, and storage bins 26 having a storage bin exposed surface 26a. FIG. 3 further shows cabin seats 27 having seat frames 28 with seat frame exposed surfaces 28a, and seat armrests 29 with seat armrest exposed surfaces 29a.

FIG 4 is a partial outboard view from within an aircraft cabin interior 14 of an aircraft 10 that can be of the type shown in FIGs. 1 , 2, and 3, for example. As shown in FIG. 4, aircraft cabin interior sidewall panels 20 include an aircraft interior sidewall panel exposed surface 21. Sidewall panel exposed surface 21 further comprises two distinct regions on the exposed surface 21: 1) the sidewall panel exposed surface first region 21a (referred to equivalently herein as a "structure exterior surface first region"); and 2) the sidewall panel exposed surface second region 21b (referred to equivalently herein as a "structure exterior surface second region").

FIG. 4 further shows aircraft cabin interior storage bins (referred to equivalently herein as "storage bins") 26 that comprise a storage bin exterior surface 26a. Storage bin exterior surface 26a further comprises two distinct regions on the storage bin exposed surface 26a: 1) the storage bin exposed surface first region 26b (referred to equivalently herein as a "structure exterior surface first region"); and 2) the storage bin exterior surface second region 26c (referred to equivalently herein as a "structure exterior surface second region").

Further, FIG. 4 shows aircraft cabin interior partition wall 30 that comprises a partition wall exterior surface 31. Partition wall exterior surface 31 further comprises two distinct regions: 1) the partition wall exterior surface first region 31a (referred to equivalently herein as a "structure exterior surface first region"); and 2) the partition wall exterior surface second region 31b (referred to equivalently herein as a "structure exterior surface second region").

According to present aspects, the structure exterior surface first regions are located at exterior surface regions that have presently been determined to be and identified as areas of "high-risk" for abrasion and other exterior surface topical damage, etc. The structure exterior surface second regions are located at structure exterior surface regions (that can abut or be located proximate to the structure exterior surface first regions) and that have presently been determined and identified to rest beyond "high-risk damage" regions, and, instead, occupy regions of lower-risk for damage as compared to the "high-risk damage regions" found in the first regions.

The areas of an aircraft cabin interior structure considered to be "high-risk" for damage, including abrasion damage, can adjoin more than one type of cabin structure. For example, the region of a storage bin that is has been identified as likely to encounter rough contact usage and/or repeated impact as a passenger loads and unloads baggage into the storage bin can be considered an identified high-risk damage region or area for anticipated damage of such storage bin exterior surface. Similarly, as a passenger loads and/or unloads baggage into a storage bin, a region of an aircraft cabin ceiling adjacent or proximate to the storage bin also can be at risk for damage and can be deemed to be in an identified region of high risk for damage from abrasion, etc. An identified high-risk level for potential damage to such a ceiling section as baggage comes into contact with the ceiling exterior first region includes abrasion and any impact that can abrades, and/or otherwise mar an initial appearance of the aircraft cabin ceiling located in the high-risk damage area of the ceiling exterior surface.

In addition, high-risk regions for abrasion and abrasive damage (including, for example, "cosmetic" or aesthetic surface damage of aircraft cabin structure exterior surfaces including, for example, exteriors of sidewalls, partition walls, suite walls, lavatory door and walls, etc.), can also exist at the regions of such cabin structures that rest proximate to, for example, an aircraft cabin floor, as passenger shoes, passenger rolling baggage, galley carts, maintenance carts and equipment, or other objects, etc., can vigorously and repeatedly contact, impact, and potentially damage these cabin structure exterior surface first regions, at least, for example, aesthetically.

In addition, certain aircraft cabin structure exterior surfaces can be located at or near high-risk areas for exterior surface damage, including, for example, structural surfaces that can sustain and incur repeatable operations during taxi, takeoff, landing, and during flight, etc. One example of such a structure is the header panel exterior surface that can house or otherwise support a partition curtain via, for example, an integral track or runner. According to present aspects, the operation of repeatedly deploying and stowing a partition curtain can place an adjoining or adjacent structure surface exterior at an identified greater or higher risk for damage from abrasion, etc.

While certain vehicle cabin interior structures are illustrated herein, such illustrations are not intended to be limiting. Indeed, according to present aspects, the disclosed improved vehicle cabin interior structures (that can be, for example, aircraft cabin interior structures) are intended to include any structure exterior that resides in a region that is, according to present aspect, identified as residing in a location that can incur a "high-risk" of routine abrasion, scuffing, marking, etc., with such structures including, but not limited to, at least one of a storage bin exterior surface, a ceiling exterior surface, a partition wall exterior surface, a lavatory wall exterior surface, a lavatory door exterior surface, a galley area wall exterior surface, a flight deck door exterior surface, a closet exterior surface, a sidewall exterior surface, seat assembly exterior surfaces, etc., and combinations thereof.

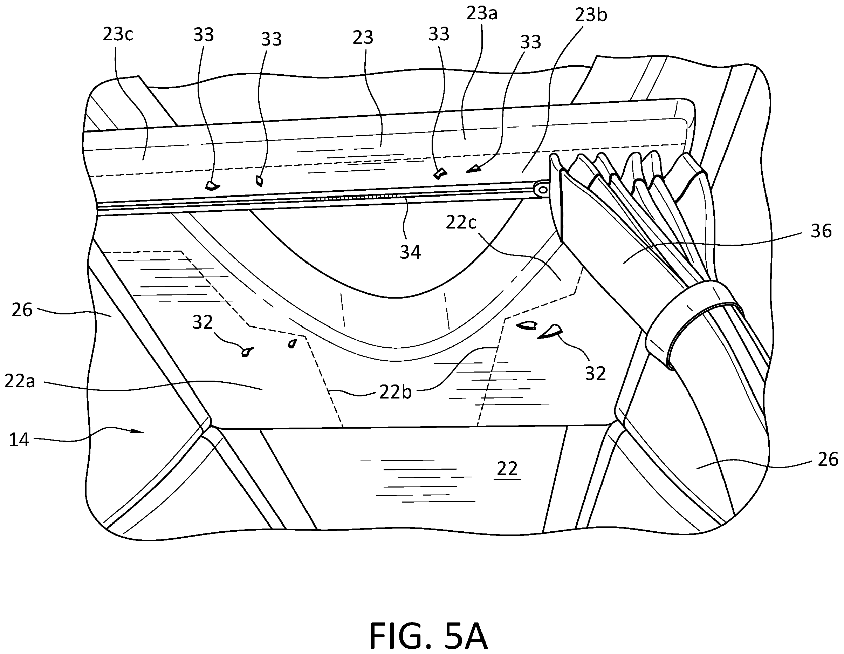

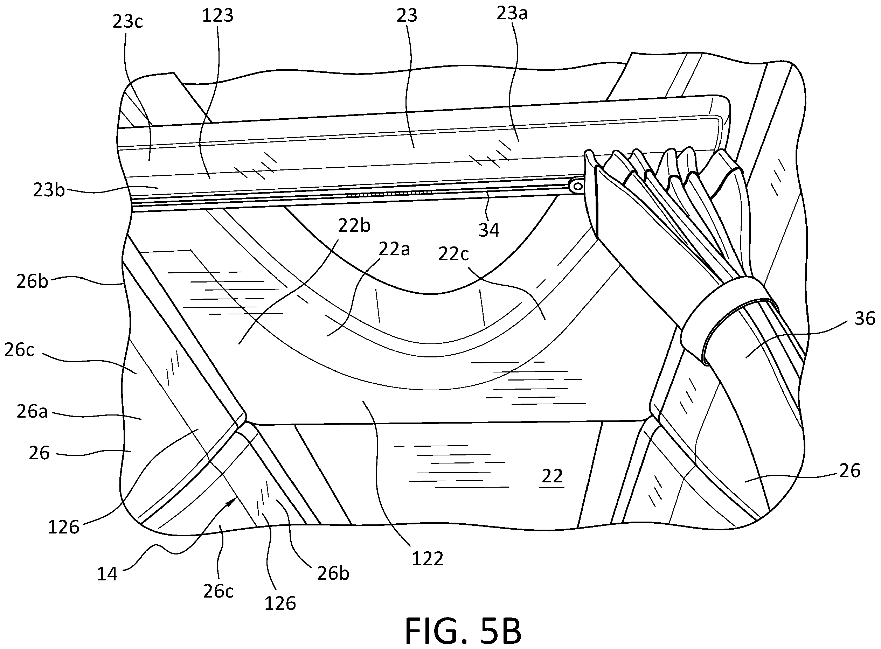

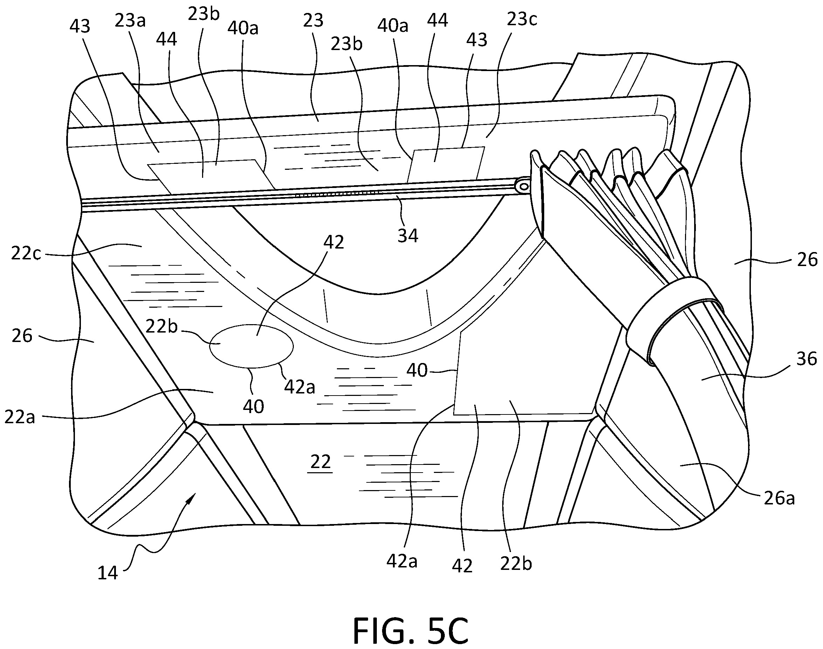

For example, FIGs. 5A, 5B, and 5C illustrate present aspects addressing ceiling and header panel damage to exterior surfaces. FIG. 5A is an upward view from within an aircraft cabin of an aircraft of the type shown in FIGs. 1, 2, 3, 4, for example. The aircraft cabin structure exposed surfaces shown in FIG. 5A do not incorporate the present aspects. Instead, FIG. 5A shows "high-risk" damage regions (referred to equivalently herein as the structure exterior surface first regions) with damage incurred in this first region. FIG. 5A, shows an upward view within an aircraft cabin 14 toward an aircraft cabin ceiling 22 having an aircraft ceiling exposed surface 22a, a ceiling exterior surface first region 22b, and a ceiling exterior surface second region 22c. FIG. 5A further shows ceiling exposed surface 22a having sustained ceiling abrasions 32 that can have occurred from luggage removal from storage bin 26, for example. FIG. 5A further shows outlines the ceiling exterior surface first region 22b. of ceiling 22 (the "high-risk" damage region) within the "dotted lines".

FIG. 5A also shows a header panel 23 comprising a header panel track 34 supporting a curtain partition 36. Header panel 23 further comprises a header panel exterior surface 23a, a header panel exterior surface first region 23b (a "high-risk damage region), and a header panel exterior surface second region 23c that is separated from the "high-risk" damage first region 23b by the "dotted line". As shown in FIG. 5A header panel exterior surface 23a has sustained abrasion damage in the "high-risk" damage first region 23b, shown as header panel abrasions 33.

According to present aspects, high-risk damage regions of various cabin structure surface exteriors can be determined and identified for individual structures by, for example, evaluating rework schedules, reports, etc. According to present aspects, the high-risk damage regions for aircraft cabin structure exteriors can be protected by installing and otherwise providing improved aircraft cabin interior structures with a protective outer coating layer film made from a self-healing material, with the protective outer coating layer film applied as a partial outer coating that is configured to only be applied to, reside at, and protect the exterior surfaces of selected aircraft cabin interior structure exterior regions that are identified and determined to be within regions on the structure exterior surfaces that are then designated to be "high-risk" damage regions. According to present aspects, the application of the self-healing protective material coating layer that can be, for example, a film only to "high-risk" damage regions of selected structure exteriors within "high-risk" damage regions affords such structure exteriors significantly enhanced protection from abrasions, scuffs, markings, etc., while also reducing the cost, material, labor, and overall coating weight that would be realized if an entire structure surface exterior was treated with the protective layer of self-healing protective material.

As shown in FIG. 5B, improved aircraft cabin structures (presently disclosed improvements made to the structures shown in FIG. 5A) having cabin structure exteriors are shown comprising a partial outer coating layer comprising a self-healing material that is configured to significantly resist sustained impact damage from, for example, abrasion through scuffing, etc. According to present aspects, FIG. 5B shows the ceiling and header panels shown in FIG. 5A, but with the "high-risk" damage regions of the ceiling exterior and header panel exterior determined and identified, and now protected from abrasion and other abrasive damage, as the cabin structure exterior first regions now comprising the self-healing partial outer coating layer.

More specifically, FIG. 5B shows an upward view within an aircraft cabin 14 (of an aircraft 10 of the type shown in FIGs.1, 2, 3) toward an aircraft cabin ceiling 22 having an aircraft ceiling exterior surface 22a, a ceiling exterior surface first region 22b, and a ceiling exterior surface second region 22c. Unlike FIG. 5A, FIG. 5B further shows protective partial outer coating layer 122 in place and covering the substantial entirety of the ceiling exterior surface first region 22b (the "high-risk" damage area of the ceiling exterior surface 22a). As shown in FIG. 5B the lower-risk damage area of the cabin ceiling exterior surface 22a denoted as the ceiling exterior surface second region 22c is shown residing adjacent to and outside of (e.g., beyond) the boundary of the high-risk damage area denoted as the ceiling exterior surface first region 22b, and not coated with protective partial outer coating layer 122.

FIG. 5B further shows header panel 23 similar to that shown in FIG. 5A, with header panel 23 comprising a header panel track 34 supporting a curtain partition 36. Header panel 23 further comprises a header panel exterior surface 23a. Unlike FIG. 5A, FIG. 5B further shows protective partial outer coating layer 123 in place and covering the substantial entirety and/or the entirety of the header panel exterior surface first region 23b (the "high-risk" damage area of the header panel exterior surface 23a). As shown in FIG. 5B the lower-risk damage area of the header panel 23 denoted as the header panel exterior surface second region 23c is shown residing adjacent to and outside of (e.g., beyond) the boundary of the high-risk damage area denoted as the header panel exterior surface first region 23b, and not coated with protective partial outer coating layer 123.

In addition, FIG. 5B shows storage bin 26 similar to that shown in FIG. 5A with storage bin 26 comprising storage bin exterior surface 26a. Unlike FIG. 5A, FIG. 5B further shows protective partial outer coating layer 126 in place and covering the substantial entirety of the storage bin exterior surface first region 26b (the "high-risk" damage area of the storage bin exterior surface 26a). As shown in FIG. 5B the lower-risk damage area of the storage bin 26 denoted as the storage bin exterior surface second region 26c is shown residing adjacent to and outside of (e.g., beyond) the boundary of the high-risk damage area denoted as the storage bin exterior surface first region 26b, and not coated with protective partial outer coating layer 126.

According to present aspects, by selectively applying the partial outer coating layer only to the structure regions determined to be and designated as "high-risk" of damage exterior regions of selected cabin interior structures, the cabin structures that were previously subjected to the risk of abrasion damage are now significantly improved, as is the entire aesthetic of the aircraft cabin structure that comprise the improved partially coated structures, as well as the condition of the overall aircraft housing the improved cabin and the improved cabin structures. The application of the protective self-healing partial coating layer to only selected and designated high-risk damage regions allows the cabin structure to have significantly improved abrasion protection, while keeping additional cost low for the inclusion of the protective coating layer to selected high-risk regions, while also reducing the weight increase (to, for example, an aircraft) that would otherwise be realized by providing the additional coating to an entire cabin structure exterior (e.g., beyond the high-risk region).

According to present aspects, the outer coating layer that covers only a selected and designated portion of a cabin structure surface exterior (that is less than the entire area of the cabin structure surface exterior) is considered to be a partial outer coating layer for a structure exterior. According to further present aspects, the partial outer coating layer is made from an optically transparent material such that the visual features (e.g., color, design, visually perceived texture, etc.) of an underlying surface exterior material (that can be a decorative laminate material) will be visually unencumbered by the transparent partial outer coating layer, with the transparent partial outer coating layer allowing light to pass therethrough without appreciable scattering of light.

According to further present aspects, the partial outer coating layer that is preferably transparent comprises or is a polymeric self-healing material. According to present aspects, a self-healing material is understood to dissipate energy incurred from contact or impact across its surface area. While being bound to no particular theory, it is believed that in instances where a surface indentation or surface mar is sustained by the self-healing material layer, at temperatures that are at, or slightly above, room temperature, the self-healing material can create covalent bonds at the molecular level, allowing the polymer to autonomously "heal" or reorganize its structure (including its surface structure and appearance) with little or no external energy supplied, while retaining over 90% of an original material strength as originally applied.

According to present examples, the present partial outer coatings can comprise a thermoplastic polyurethane as a thermoplastic material. Thermoplastic polyurethanes (TPU) are melt-processing polymers having a high elasticity, high tensile strength, low-temperature resistance, good wear-resistance, and good corrosion resistance ability. In one example, the partial outer coating layer comprising a thermoplastic polyurethane, and the thermoplastic polyurethane material itself, can each have a Young's modulus value ranging from about 10 MPa to about 120 MPa.

According to present aspects, the partial outer coatings comprising thermoplastic polyurethane materials can undergo self-healing at room temperature, or can have the self-healing mechanism hastened (during, for example, regular cleaning and maintenance by personnel) when slight heat ranging from about 100°F to about 140°F is supplied (e.g., in the form of warm water or heated air applications) to the partial outer coating layer of the cabin interior structure exterior surface first regions.

According to a present aspect, the partial outer coating layer can be a coating layer in the form of a film, and that further can be a single layer film, and that can comprise an acrylic adhesive layer such that the partial outer coating layer can be a self-adhering partial outer coating layer film. In one example, the partial coating layer can comprise a thermoplastic polyurethane (TPU) layer having an average thickness across its area ranging from about 2 mm to about 8 mm. In another example the partial coating layer can comprise a thermoplastic polyurethane (TPU) layer having an average thickness across its area of about 6 mm, and an adhesive layer on one side of the TPU layer, with the adhesive layer (that can be an optically transparent acrylic adhesive layer) having an average thickness ranging from about 1 mm to about 3 mm, and preferably having an average thickness of about 1.6 mm.

According to present aspects, the transparent partial outer coating layer can be self-adhering or can be applied to a cabin structure exterior surface with an interposed adhesive layer supplied that can be a spray adhesive that will dry into a transparent adhesive layer, or that can be a transparent pressure-sensitive adhesive film layer, for example. The transparent adhesive layer selected will be compatible with the underlying cabin structure exterior surface material that can also be a thermoplastic material, or that can be a composite material, a paint, a fabric, etc., with a material such as TEDLAR^{®} being one preferred cabin substrate exterior surface treatment. According to present aspects, the transparent partial outer coating layer will not impede the visual characteristics and aesthetics or the underlying cabin structure (former) exterior surface.

According to present aspects, the partial outer coating layer will remain transparent over time, and will not discolor. If desired, the partial outer coating layer can further protect the underlying cabin structure exterior surface from UV/visible-light damage by incorporating a UV/visible-light-resistant material into the thermoplastic polyurethane material, or by incorporating a separate UV/visible light-resistant material layer into the partial outer coating.

In one example, where complete transparency of the partial outer coating layer is not needed, the partial outer coating layer can afford underlying (e.g., coated) cabin structure exterior surfaces significant UV protection. According to one example, the present partial outer coating layers may provide all or nearly all of the UV protection to be afforded a cabin structure surface by comprising a UV/visible light transmittance value ranging from about 0% to about 20% UV/visible light transmittance for UV/visible light wavelengths ranging from about 180 nm to about 800 nm when the partial outer coating layer comprises a UV/visible light-resistant layer comprising an average thickness ranging from about 2 mils to about 6 mils.

The partial outer coating layer can be installed or otherwise incorporated into and onto selected regions of cabin structures pre-assembly. That is, the partial outer coating layer can be added to cabin structure exterior surfaces within the high-risk abrasion regions of the cabin structures before they are assembled in place during vehicle cabin manufacture such that the improved cabin structures can incorporate the enhanced surface abrasion protection from the time of delivery of a new vehicle (e.g., an aircraft) incorporating the improved vehicle cabin comprising the improved vehicle cabin structures.

In addition, according to present aspects, the partial outer coating layers can be retrofit into existing vehicle cabins to afford portions of cabin structure exteriors that will reside in high-risk damage regions significantly enhanced abrasion protection. That is, according to present aspects, the cabin structure exterior surface first (high-risk damage) regions can be coated with the present partial outer coating layer, as the partial outer coating layer can be cut to selected sizes for the purpose of effecting a retrofit.

Returning to FIG. 5A, as the aesthetic appearance of the ceiling and header exposed surfaces sustain cosmetic damage to their appearance of the type illustrated and represented in FIG. 5A, rework of the impacted area showing wear may be desired. Present aspects are directed to the rework of aircraft cabin structure exposed surfaces that have sustained damage within regions of the ceiling exposed surface first region that may be designated and identified as a "high-risk damage area" that can include, for example, abrasion from the impact of luggage being stowed into storage bins 26. FIG. 5A shows the ceiling exposed surface first region 22b.of ceiling 22 as the high-risk damage region within the "dotted lines".

According to present aspects, an improved rework patch for aircraft cabin interior structure exposed surfaces can be used to restore the aesthetic appearance to cabin structure exposed surfaces (e.g., the header panel, the cabin ceiling, etc.) that have sustained abrasion damage, as shown, for example, in FIG. 5A. According to present aspects, when damage has occurred in a "high-risk" damage region of a structure exposed surface and rework is needed, the present rework patches comprising the partial outer coating layer can be installed to remove already incurred damage as well as eliminating future abrasion damage at the reworked areas of the cabin structure exterior surfaces.

That is, the improved rework patch can comprise the material used for the aircraft cabin structure being reworked, where a material can be, for example a replacement section of TEDLAR^{®} or any other decorative laminate material typically used in conjunction with an exterior decorative laminate exterior surface of an aircraft cabin interior structure. According to present aspects, the improved rework patch further incorporates an outer layer or coating layer of a self-healing outer coating layer material, that is preferably a substantially transparent self-healing thermoplastic polyurethane material when applied at a selected thickness to the decorative laminate.

FIG. 5C shows the upward view from within a vehicle cabin as shown in FIG. 5A. As shown in FIG. 5C, according to present aspects, via rework, including the installation of present rework patches (incorporating the partial outer coating layer), the ceiling abrasions 32 and the header panel abrasions 33 (shown in FIG. 5A) are now eliminated from the ceiling exterior surface first region 22b and the header panel exterior surface first region 23b, respectively.

That is, as shown in FIG. 5C, within the ceiling exterior surface first area 22b, a structure surface rework patch 40a is shown installed (e.g., "reworked") into cabin ceiling exterior surface 22a (and within the header panel exterior surface first region 22b) at structure surface rework patch area 40. The rework patch 42a can comprise a layer or layer of the cabin ceiling exterior surface that can be, for example, a high performance polyvinyl fluoride film or other material used for vehicle cabin exterior surfaces (e.g., TEDLAR^{®}, DuPont), with the present partial outer coating 42 supplied to the rework path as the rework patch outer layer.

FIG. 5C further shows present rework patches comprising the partial outer coating material used to rework a region of the header panel 23. That is, as shown in FIG. 5C, within the header panel exterior surface first area 23b, a structure surface rework patch 40a is shown installed (e.g., "reworked") into cabin ceiling exterior surface 23a (and within the header panel exterior surface first region 23b) at structure surface rework patch area 43. The rework patch 40a can comprise a layer or layer of the cabin ceiling exterior surface that can be, for example, a high performance polyvinyl fluoride film or other material used for vehicle cabin exterior surfaces (e.g., TEDLAR^{®}, DuPont), with the present partial outer coating 44 supplied to the rework path as the rework patch outer layer..

The type of resulting abrasive damage to aircraft cabin structure surface exteriors (as shown, for example, in FIG. 5A) can be incurred by other aircraft cabin structure surface exteriors shown elsewhere in the present FIGs. Accordingly, though not explicitly shown, present aspects further contemplate the present rework patches comprising the partial outer coating layer useful for reworking further cabin structure exterior surfaces including, but not limited to, cabin structure exterior surfaces having surface abrasions at least in identified high-risk abrasion regions of, for example, a storage bin, a partition wall, a lavatory wall, a lavatory door, a flight deck door, a galley wall, a sidewall, a seat frame, a seat armrest, a seat assembly panel exterior, etc.

As set forth herein, high-risk damage areas for abrasion can occur on a vehicle cabin structure that can be positioned adjacent to a cabin aisle and/or a cabin floor, including, for example, a vehicle cabin seating structure that can include seating area walls or partitions, etc., and that can occur at exterior surfaces of, for example, first class, or business class seating "suites", "pod suites", or other fully-reclining seating areas that can be "walled-off" for added privacy, etc.

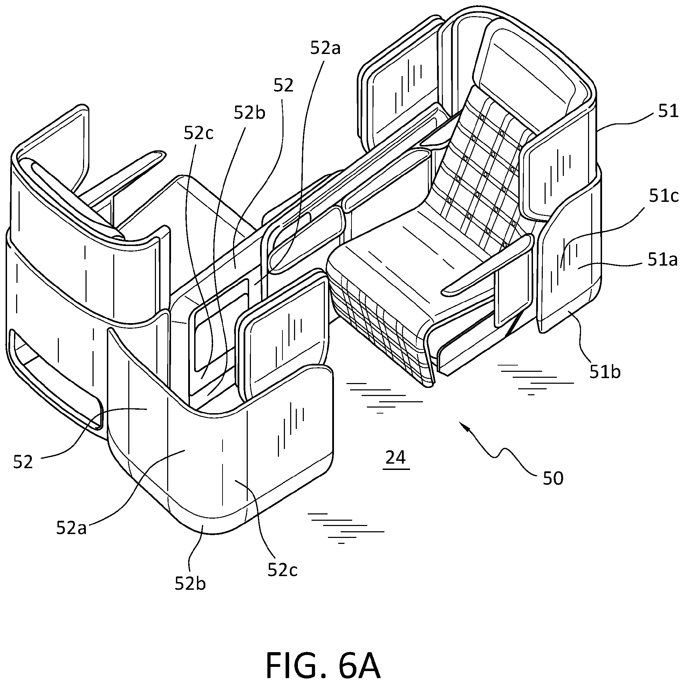

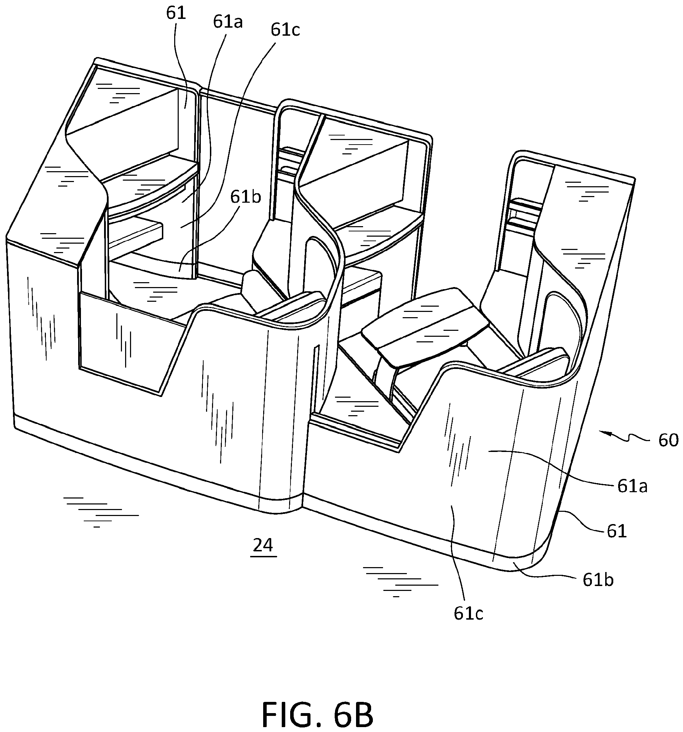

FIGs 6A and 6B are illustrations of seating areas in vehicle cabins that comprise privacy area with partitions adjacent cabin aisles and/or a vehicle cabin floor, and that can further comprise regions of high-risk damage for abrasion from rolling luggage, gally carts, shoe scuffs from passengers, etc. As shown in FIGs. 6A and 6B, the seating "pods", "suites", etc., can further comprise regions of high-risk damage from abrasion that can also occur within the seating area, and can include regions of "high-risk" damage from abrasion that can occur within the "pod", "suites" with respect to partitions, etc., that are positioned adjacent a cabin floor. The exterior surfaces of the seating pods/suites can be painted, and/or can comprise decorative laminate coatings on exterior surfaces, as described herein with respect to partitions, walls, ceilings, etc.

FIG. 6A shows a vehicle cabin seating assembly 50 comprising a seat that can substantially and/or completely fully recline (e.g., lay flat). The seating assembly 50 comprises seating assembly partitions (referred to equivalently herein as a seating assembly panels) 51, 52 that can partially surround the seating assembly 50, and that further can be positioned adjacent to or substantially adjacent to vehicle cabin floor 24. As explained herein, the partition exterior surfaces 51a, 52a comprise regions of high-risk damage from abrasion, referred to herein as structure exterior surface first regions 51b, 52b, and regions of lower risk from abrasion, referred to herein as structure exterior surface second regions 51c, 52c. As described herein, according to present aspects, the partition exterior surfaces 51a, 52a (that can be, for example, coated with decorative laminate material, or that can be painted exterior surfaces, etc.) can benefit from the application of the present partial outer coating layer when applied to structure exterior surface first regions 51b, 52b (the high-risk damage regions).

As further shown in FIG. 6A, although not positioned adjacent a vehicle cabin aisle, the portions of the partitions located within the surrounded seating assembly 50 and that are located proximate to and/or immediately adjacent to a vehicle cabin floor 24 (e.g., within the area surrounded seating assembly 50) can further comprise the structure exterior surface first region 52b and can further benefit from application of the present partial protective coatings applied to these additional structure exterior surface first regions 52b that can and have a higher likelihood of sustaining abrasion damage from, for example, passenger shoe scuffs, abrasion during floor cleaning/vacuuming, etc.

FIG. 6B illustrates a further vehicle cabin seating assembly 60. FIG. 6B shows a vehicle cabin seating assembly 60 comprising a seat within a suite or pod that is surrounded by seating assembly panels 61. Seating assembly panels 61 can partially or substantially surround the area of the seating assembly 60, and further can be positioned adjacent to or substantially adjacent to vehicle cabin floor 24. The partition exterior surfaces referred to equivalently herein as the "structure surface exterior" or "seating assembly panel exterior surface" 61a comprise regions of high-risk damage from abrasion referred to herein as structure exterior surface first regions 61b, and regions of lower risk from abrasion referred to herein as structure exterior surface second regions 61c. As described herein, according to present aspects, the structure surface exteriors 61a (that can be, for example, coated with decorative laminate material, or that can be painted exterior surfaces, etc.) can benefit from the application of the present partial outer coating layer when applied to structure exterior surface exterior first regions 61b(the high-risk damage regions).

As further shown in FIG. 6B, although not positioned adjacent a vehicle cabin aisle, the portions of the partitions located within the surrounded seating assembly area 60 and that are located proximate to and/or immediately adjacent to a vehicle cabin floor 24 (e.g., an area within the surrounded seating assembly 60) can further comprise the structure exterior surface first region 61b and can further benefit from application of the present partial protective coatings applied to these additional structure exterior surface first regions 61b.

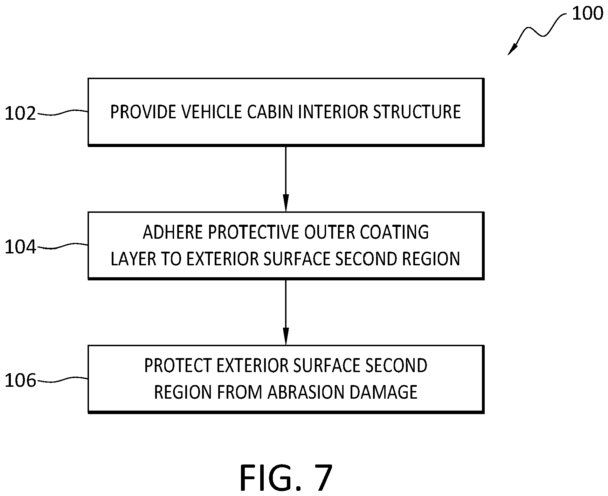

FIG 7, is a flowchart outlining a method 100 for protecting a vehicle cabin interior structure region from surface damage that can include surface abrasion damage, with the method 100 including, providing 102 a vehicle cabin interior structure, with the vehicle cabin interior structure comprising a structure exterior surface, with the structure exterior surface comprising a structure exterior surface first region having a first area and a structure exterior surface second region having a second area, with the structure exterior surface first region positioned adjacent to the structure exterior surface second region, and with the structure exterior surface first region positioned within a high-risk damage location The method further includes adhering 104 a protective outer coating layer only to the structure exterior surface first region, and protecting 106 the structure exterior surface first region from abrasion damage. According to present aspects, the protective outer coating layer is a transparent, self-healing material that can be, for example a thermoplastic polyurethane material that can self-heal at or near room temperature and that can further self-heal at a temperature ranging from about 70°F to about 120°F. The methods outlined in FIG. 7 are understood to incorporate the vehicle cabin structures, and the vehicles incorporating the cabin structures, including aircraft and aircraft cabin structures, described herein and at least shown in FIGs. 1, 2, 3, 4, 5A,5B, 5C, 6A, and 6B.

A further present aspect is directed to a method for reworking a vehicle cabin interior structure region from surface damage that can include surface abrasion damage, with the method including, providing a vehicle cabin interior structure, with the vehicle cabin interior structure comprising a structure exterior surface, with the structure exterior surface comprising a structure exterior surface first region having a first area and a structure exterior surface second region having a second area, with the structure exterior first region positioned adjacent to the structure exterior surface second region, and with the structure exterior surface first region positioned within a high-risk damage location The method further includes adhering a rework patch to the vehicle cabin structure exterior surface, with the rework patch comprising a protective outer coating layer. According to present aspects, the protective outer coating layer is a transparent, self-healing material that can be, for example a thermoplastic polyurethane material that can self-heal at or near room temperature and that can further self-heal at a temperature ranging from about 70°F to about 120°F.

The term "substantially" as used herein means that a particular characteristic, parameter, or value does not need to be exactly achieved. Rather, deviations or variations, including, for example, tolerances, measurement error, measurement accuracy limitations, and other factors known to those skilled in the field, may occur in amounts that do not preclude the effect that the characteristic was intended to provide.

Further examples are set out in the clauses below:
1.A vehicle cabin interior structure comprising: a structure exterior surface comprising a structure exterior surface first region, said structure exterior surface first region and a structure exterior surface second region, said structure exterior surface first region positioned adjacent to the structure exterior surface second region; and a partial outer coating layer, said partial outer coating layer comprising a self- healing material, said partial outer coating layer configured to coat only the structure exterior surface first region, said partial outer coating layer positioned adjacent the structure exterior surface second region.
2.The vehicle cabin interior structure of Clause 1, wherein the structure exterior surface first region further comprises a decorative laminate coating layer positioned beneath the partial outer coating layer.
3.The vehicle cabin interior structure of Clause 1 or 2, wherein the partial outer coating layer comprises a thermoplastic polyurethane.
4.The vehicle cabin interior structure of any one of Clauses 1-3, wherein the structure surface exterior first region is located at a high-risk damage area for structure surface exterior abrasion damage.
5.The vehicle cabin interior structure of any one Clauses 1-4, wherein said partial outer coating layer is a substantially transparent film layer.
6.The vehicle cabin interior structure of Clauses 1-5, wherein the partial outer coating layer comprises a UV/visible light-resistant material.
7.The vehicle cabin interior structure of any one of Clauses 1-6, wherein the structure exterior surface comprises a surface exterior of at least one of a storage bin, a ceiling, a partition wall, a lavatory wall, a lavatory door, a galley wall, a sidewall, a seat frame, a seat armrest, and combinations thereof.
8.The vehicle cabin interior structure of any one of Clauses 1-7, wherein the partial outer coating layer does not coat the structure exterior surface second region.
9.The vehicle cabin interior structure of any one of Clauses 1-8, wherein the partial outer coating layer further comprises an adhesive layer.
10. The vehicle cabin interior structure of any one of Clauses 1-9, wherein the partial outer coating layer is a self-healing partial outer coating layer film.
11.The vehicle cabin interior structure of any one of Clauses 1-10, wherein the partial outer coating layer has a Young's modulus ranging from about 10 MPa to about 120 MPa.
12. The vehicle cabin interior structure of any Clauses 1-11, wherein the partial outer coating layer comprises a UV/visible light transmittance value ranging from about 0% to about 20% UV/visible light transmittance for UV/visible light wavelengths ranging from about 180 nm to about 800 nm.
13.An aircraft cabin comprising the vehicle cabin interior structure of any one of Clauses 1-12.
14. A vehicle comprising the vehicle cabin interior structure of any one of Clauses 1-13.
15.An aircraft comprising the vehicle cabin interior structure of any one of Clauses 1-14.
16.A vehicle cabin interior structure comprising: a structure exterior surface, said structure exterior surface comprising: a rework patch area, said rework patch area comprising a decorative laminate layer, said rework patch area further comprising an abrasion-resistant outer coating layer disposed onto the decorative laminate layer, said abrasion-resistant outer coating layer comprising a self-healing thermoplastic polyurethane material.
17. The vehicle cabin interior structure of Clause 16, wherein the abrasion-resistant outer coating layer comprises a UV/visible light-resistant material.
18. The vehicle cabin interior structure of Clause 16 or 17, wherein the abrasion-resistant outer coating layer has a Young's modulus ranging from about 10 MPa to about 120 MPa.
19.An aircraft cabin comprising the vehicle cabin interior structure of any one of Clauses 16-18.
20. A vehicle comprising the vehicle cabin interior structure of any one of Clauses 16-19.
21. A vehicle cabin interior structure rework patch, said vehicle cabin interior structure rework patch comprising: a substantially transparent abrasion-resistant outer coating layer film, said substantially transparent abrasion-resistant outer coating layer film comprising a self-healing thermoplastic polyurethane material.
22.The vehicle cabin interior structure rework patch of Clause 21, wherein the substantially transparent abrasion-resistant outer coating layer film comprises a UV/visible light-resistant material.
23. The vehicle cabin interior structure rework patch of Clause 21 or 22, wherein the substantially transparent abrasion-resistant outer coating layer film has a Young's modulus ranging from about 10 MPa to about 120 MPa.
24.An aircraft cabin comprising the vehicle cabin interior structure rework patch of any one of Clauses 21-23.
25.A method for protecting a vehicle cabin interior structure region from surface damage, the method comprising: providing a vehicle cabin interior structure, said vehicle cabin interior structure comprising a structure exterior surface, said structure exterior surface comprising a structure exterior surface first region comprising a high-risk damage region, and a structure exterior surface second region, said structure exterior surface second region positioned adjacent to the structure surface exterior first region; adhering a self-healing protective outer coating layer only to the structure exterior surface first region; and protecting the structure exterior surface first region from surface damage.
26. The method of Clause 25, wherein said self-healing protective outer coating layer comprises a substantially transparent thermoplastic polyurethane film.
27. The method of Clause 25 or 26, wherein said structure exterior surface first region further comprises a decorative laminate layer located beneath the self-healing protective outer coating layer.
28. The method of any one of Clauses 26-27, wherein said self-healing protective outer coating layer comprises a UV/visible light-resistant material.
29. The method of any one of Clauses 26-28, wherein said self-healing protective outer coating layer further comprises an adhesive layer.
30. The method of any one of Clauses 26-29, wherein the protective outer coating layer has a Young's modulus ranging from about 10 MPa to about 120 MPa.

The present aspects may, of course, be carried out in other ways than those specifically set forth herein without departing from essential characteristics of the disclosure. The present aspects are to be considered in all respects as illustrative and not restrictive, and all changes coming within the meaning and equivalency range of the appended claims are intended to be embraced therein.

## Claims

1. A vehicle cabin interior structure (16)(20)(22)(23)(24)(26)(28)(29)(30) comprising:
a structure exterior surface (18)(21)(22a)(23a)(26a)(28a)(29a)(31) comprising a structure exterior surface first region (21a)(22b)(23b)((26b) (31a) and a structure exterior surface second region, said structure exterior surface first region positioned adjacent to the structure exterior surface second region (21b)(22c)(23c)((26c) (31b); and
a partial outer coating layer (122)(123)(126), said partial outer coating layer comprising a self-healing material, said partial outer coating layer configured to coat only the structure exterior surface first region, said partial outer coating layer positioned adjacent the structure exterior surface second region.

2. The vehicle cabin interior structure of Claim 1, wherein the structure exterior surface first region further comprises a decorative laminate coating layer positioned beneath the partial outer coating layer; and/or optionally
wherein the partial outer coating layer comprises a thermoplastic polyurethane; and/or optionally
wherein the structure surface exterior first region is located at a high-risk damage area for structure surface exterior abrasion damage; and /or optionally
wherein said partial outer coating layer is a substantially transparent film layer.

3. The vehicle cabin interior structure of Claim 1, wherein the partial outer coating layer comprises a UV/visible light-resistant material; and/or optionally
wherein the structure exterior surface comprises a surface exterior of at least one of a storage bin, a ceiling, a partition wall, a lavatory wall, a lavatory door, a galley wall, a sidewall, a seat frame, a seat armrest, and combinations thereof; and/or optionally wherein the partial outer coating layer does not coat the structure exterior surface second region.

4. The vehicle cabin interior structure of Claim 1 or claim 2, wherein the partial outer coating layer comprises a thermoplastic polyurethane and further comprises an adhesive layer; and/or optionally
wherein the partial outer coating layer comprises a thermoplastic polyurethane and is a self-healing partial outer coating layer film.

5. The vehicle cabin interior structure of Claim 3, wherein the partial outer coating layer polyurethane and has a Young's modulus ranging from about 10 MPa to about 120 MPa.

6. The vehicle cabin interior structure of claim 1 or claim 2, wherein the partial outer coating layer comprises a UV/visible light-resistant material; and wherein the partial outer coating layer comprises a UV/visible light transmittance value ranging from about 0% to about 20% UV/visible light transmittance for UV/visible light wavelengths ranging from about 180 nm to about 800 nm.

7. The vehicle cabin interior structure of any one of claims 1-6 comprising an aircraft cabin (14); a vehicle, or an aircraft.

8. A vehicle cabin interior structure rework patch (40a)(42a), said vehicle cabin interior structure rework patch comprising:
a substantially transparent abrasion-resistant outer coating layer film, said substantially transparent abrasion-resistant outer coating layer film comprising a self-healing thermoplastic polyurethane material.

9. The vehicle cabin interior structure rework patch of Claim 8, wherein the substantially transparent abrasion-resistant outer coating layer film comprises a UV/visible light-resistant material.

10. The vehicle cabin interior structure rework patch of Claim 8, wherein the substantially transparent abrasion-resistant outer coating layer film has a Young's modulus ranging from about 10 MPa to about 120 MPa.

11. The vehicle cabin interior structure rework patch of any one of claims 8-19 comprising an aircraft cabin (14).

12. A method (100) for protecting a vehicle cabin interior structure region from surface damage, the method comprising:
providing (102) a vehicle cabin interior structure, said vehicle cabin interior structure comprising a structure exterior surface, said structure exterior surface comprising a structure exterior surface first region comprising a high-risk damage region, and a structure exterior surface second region, said structure exterior surface second region positioned adjacent to the structure surface exterior first region;
adhering (104) a self-healing protective outer coating layer only to the structure exterior surface first region; and
protecting (106) the structure exterior surface first region from surface damage.

13. The method of Claim 12, wherein said self-healing protective outer coating layer comprises a substantially transparent thermoplastic polyurethane film; and/or optionally wherein said structure exterior surface first region further comprises a decorative laminate layer located beneath the self-healing protective outer coating layer.

14. The method of Claim 12, wherein said self-healing protective outer coating layer comprises a UV/visible light-resistant material.

15. The method of Claim 12, wherein said self-healing protective outer coating layer further comprises an adhesive layer; and/or optionally
wherein the protective outer coating layer has a Young's modulus ranging from about 10 MPa to about 120 MPa.
